# EUROPEAN PATENT SPECIFICATION

(11) **EP 4 220 749 B1**
(45) Date of publication and mention of the grant of the patent: **18.03.2026**
(21) Application number: 22213186.4
(22) Date of filing: 13.12.2022
(51) Int. Cl.: H01M 4/04, H01M 4/131, H01M 4/139, H01M 4/505, H01M 4/66, H01M 10/052, H01M 10/0562, H01M 10/0585

(54) **ELECTRODE**
ELEKTRODE
ELECTRODE

(30) Priority: 27.01.2022 JP 2022010724
(43) Date of publication of application: 02.08.2023
(73) Proprietor: TOYOTA JIDOSHA KABUSHIKI KAISHA, Aichi-Ken 471-8571 (JP)
(72) Inventor: SAKAMOTO, Ryuto, Toyota-shi, 471-8571 (JP); ITO, Hirotomo, Tokyo, 104-8381 (JP); FUKAGAWA, Soichiro, Tokyo, 104-8381 (JP)
(74) Representative: D Young & Co LLP

(56) References cited:
- JP-A- 2012 243 476
- KR-A- 20140 095 475
- KR-B1- 101 693 359
- US-A1- 2015 086 875

## Description

### BACKGROUND OF THE INVENTION

### 1. Field of the Invention

The present disclosure relates to an electrode for an all-solid-state battery.

### 2. Description of Related Art

An all-solid-state battery is a battery having a solid electrolyte layer between a positive electrode and a negative electrode and has an advantage that simplification of safety devices may be easily attempted as compared to a liquid-based battery having a liquid electrolyte including a flammable organic solvent.

For example, Japanese Unexamined Patent Application Publication No. 2020-129485 (JP 2020-129485 A) discloses an all-solid-state battery that includes a first current collector foil, a first mixture material layer, a solid electrolyte layer, a second mixture material layer, and a second current collector foil, and is provided with a carbon material layer having an adhesive function on a surface on the second mixture material layer side of the second current collector foil. Furthermore, Japanese Unexamined Patent Application Publication No. 2020-140932 (JP 2020-140932 A) discloses an all-solid-state battery which includes a laminated battery unit in which a first current collector layer, a first active material layer, a solid electrolyte layer, a second active material layer, a second current collector layer, a second active material layer, a solid electrolyte layer, a first active material layer, and a first current collector layer are laminated in this order, and in which the first current collector layer and the first active material layer that are adjacently laminated are adhered to each other with an adhesive.

Japanese Unexamined Patent Application Publication No. 2017-204377 (JP 2017-204377 A) discloses an all-solid-state battery that includes two or more battery units in which a current collector of a first electrode, an active material layer of the first electrode, a solid electrolyte layer, an active material layer of a second electrode, a current collector of the second electrode, an active material layer of the second electrode, a solid electrolyte layer, and an active material layer of the first electrode are laminated in this order, and has means for adhering the current collector of the first electrode of a battery unit to a battery unit laminated adjacently to the above-described current collector. Although the field is different from batteries, Japanese Unexamined Patent Application Publication No. 2019-021635 (JP 2019-021635 A) discloses an anisotropic conductive material in which specific conductive particles are dispersed in a binder resin.
US 2015/086875 A1 discusses an electrode for all solid-state secondary battery and method for producing same.
JP 2012 243476 A discusses a method for manufacturing all-solid secondary battery.
KR 2014 0095475 A discusses a conductive adhesive composition, collector with adhesive layer, and electrochemical element electrode.
KR 101 693 359 B1 discusses an aluminum current collector electrode comprising the aluminum current collector and an electrochemical device comprising the electrode.

### SUMMARY OF THE INVENTION

The invention is set out in the appended set of claims.

As disclosed in JP 2020-129485 A, it is known to provide a carbon material layer having an adhesive property between a current collector and an active material layer. On the other hand, when the all-solid-state battery reaches a high temperature (for example, 80°C), the adhesive property of the carbon material layer may decrease, and the adhesiveness between the current collector and the active material layer may decrease.

The present disclosure provides an electrode exhibiting satisfactory adhesiveness between a current collector and an active material layer at high temperatures.

A first aspect of the invention relates to an electrode. An electrode for an all-solid-state battery has a current collector, a carbon material layer having an adhesive property, and an active material layer in this order in a thickness direction, and the carbon material layer contains a carbon material, a dispersion material, and a binder.

According to the first aspect of the present disclosure, by disposing a specific carbon material layer between the current collector and the active material layer, an electrode exhibiting satisfactory adhesiveness between the current collector and the active material layer at high temperatures can be obtained.

In the first aspect of the present disclosure, a proportion of the dispersion material in the carbon material layer may be 1% by weight or more.

In the first aspect of the present disclosure, the proportion of the dispersion material in the carbon material layer may be 35% by weight or less.

In the first aspect of the present disclosure, a weight proportion of the dispersion material with respect to the carbon material in the carbon material layer may be 0.05 or more and 1.2 or less.

In the first aspect of the present disclosure, the carbon material layer may contain the binder as a main component.

In the first aspect of the present disclosure, a proportion of the binder in the carbon material layer may be 50% by weight or more.

In the first aspect of the present invention, a weight proportion of the binder with respect to the carbon material in the carbon material layer is 2.0 or more.

In the first aspect of the present disclosure, the weight proportion of the binder to the carbon material in the carbon material layer may be 2.8 or more.

In the first aspect of the present disclosure, the dispersion material may include at least one of a vinyl-based resin and a cellulose derivative.

In the first aspect of the present invention, the dispersion material includes polyvinyl alcohol.

In the first aspect of the present disclosure, the binder may include at least one of an acrylic binder and a methacrylic binder.

In the first aspect of the present disclosure, the carbon material may have an oil absorption of 175 cm³/100 g or more.

In the first aspect of the present disclosure, the carbon material may include carbon black.

In the first aspect of the present disclosure, the binder may be present at least on a surface on the current collector side of the carbon material layer.

In the first aspect of the present disclosure, a peel strength between the current collector and the active material layer may be 0.10 N/cm or more at 80°C.

A second aspect of the invention relates to an all-solid-state battery including a first electrode, a second electrode, and a solid electrolyte layer disposed between the first electrode and the second electrode, and at least one of the first electrode and the second electrode is the electrode described above.

According to the second aspect of the present disclosure, since at least one of the first electrode and the second electrode is the electrode described above, an all-solid-state battery having satisfactory durability at high temperatures can be obtained.

In the second aspect of the present disclosure, the all-solid-state battery may include a first electrode A and a first electrode B as the first electrode and include a solid electrolyte layer A and a solid electrolyte layer B as the solid electrolyte layer.

The second electrode may include a second current collector, a second active material layer A provided on a first surface of the second current collector, and a second active material layer B provided on a second surface of the second current collector.

The all-solid-state battery may include the first electrode A, the solid electrolyte layer A, the second electrode, the solid electrolyte layer B, and the first electrode B in this order in the thickness direction.

At least one of the first electrode A and the first electrode B may be the above-described electrode.

A third aspect of the invention relates to a method for producing an all-solid-state battery, the method including a preparation step and a first disposition step.

The preparation step of preparing a precursor laminate including a first active material layer A, a solid electrolyte layer A, a second active material layer A, a second current collector, a second active material layer B, a solid electrolyte layer B, and a first active material layer B in this order in a thickness direction.

The first disposition step of disposing a first current collector A on the first active material layer A of the precursor laminate, with a first carbon material layer containing a first carbon material, a first dispersion material, and a first binder interposed between the first current collector A and the first active material layer A.

According to the third aspect of the present disclosure, by disposing the first current collector A on the first active material layer A with the first carbon material layer interposed therebetween, an all-solid-state battery having satisfactory durability at high temperatures is obtained.

In the third aspect of the present disclosure, the method may have a second disposition step of disposing a first current collector B on the first active material layer B of the precursor laminate, with a second carbon material layer containing a second carbon material, a second dispersion material, and a second binder interposed between the first current collector B and the first active material layer B. The second carbon material may be the same material as the first carbon material. The second dispersion material may be the same material as the first dispersion material. The second binder may be the same material as the first binder.

According to the aspects of the present disclosure, an effect that an electrode having satisfactory adhesiveness between the current collector and the active material layer at high temperatures can be provided, is obtained.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic cross-sectional view illustrating an electrode according to the present disclosure;
FIG. 2 is a schematic cross-sectional view illustrating an all-solid-state battery according to the present disclosure;
FIG. 3 is a schematic cross-sectional view illustrating an all-solid-state battery according to the present disclosure;
FIG. 4A is a schematic cross-sectional view illustrating a method for producing an all-solid-state battery according to the present disclosure;
FIG. 4B is a schematic cross-sectional view illustrating a method for producing an all-solid-state battery according to the present disclosure;
FIG. 4C is a schematic cross-sectional view illustrating a method for producing an all-solid-state battery according to the present disclosure;
FIG. 4D is a schematic cross-sectional view illustrating a method for producing an all-solid-state battery according to the present disclosure;
FIG. 4E is a schematic cross-sectional view illustrating a method for producing an all-solid-state battery according to the present disclosure;
FIG. 5 is a schematic plan view illustrating an all-solid-state battery according to the present disclosure;
FIG. 6 is a graph showing the results of measuring the peel strength for all-solid-state batteries obtained in Examples 1 to 7 and Comparative Examples 1 and 2; and
FIG. 7 is a graph showing the results of measuring resistance for the all-solid-state batteries obtained in Examples 1 to 7 and Comparative Examples 1 and 2.

### DETAILED DESCRIPTION OF EMBODIMENTS

Hereinafter, the electrode, the all-solid-state battery, and the method for producing an all-solid-state battery according to the present disclosure will be described in detail by using the drawings. Each figure shown below is schematically shown, and the size and shape of each part are appropriately exaggerated for easy understanding. Furthermore, in this specification, on the occasion of expressing a mode of disposing another member with respect to a certain member, unless otherwise specified, when simply described as "on", unless particularly stated otherwise, the expression includes both the case in which the other member is disposed right above the certain member so as to be in contact with the certain member, and the case in which the other member is disposed above the certain member, with another member interposed therebetween.

### A. Electrode

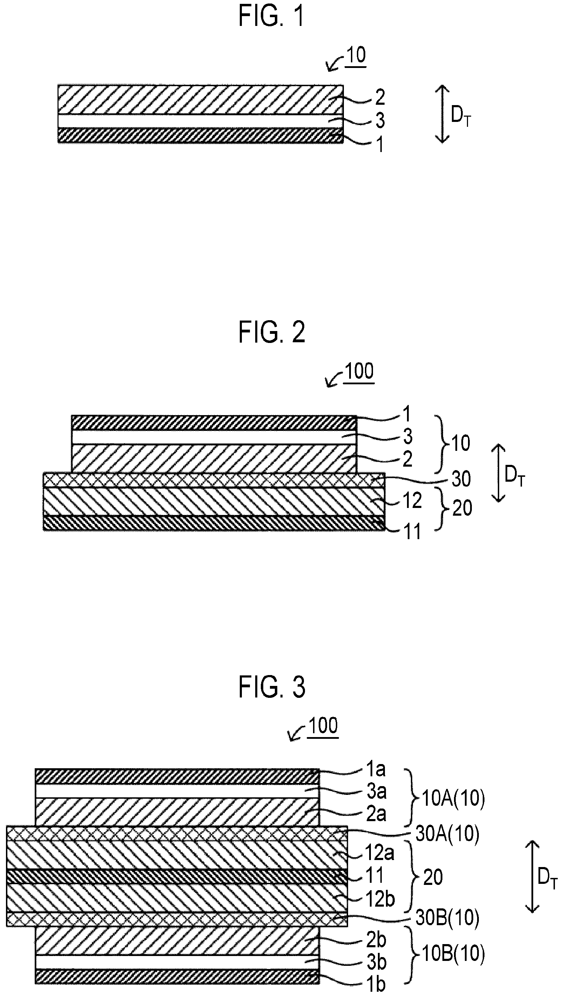

FIG. 1 is a schematic cross-sectional view illustrating an electrode according to the present disclosure, and more specifically, it is a schematic cross-sectional view illustrating a positive electrode according to the present disclosure. A positive electrode 10 shown in FIG. 1 has a positive electrode current collector 1, a carbon material layer 3 having an adhesive property, and a positive electrode active material layer 2 in this order in the thickness direction D_{T}. In FIG. 1, the positive electrode current collector 1 and the carbon material layer 3 are in contact with each other. Similarly, the carbon material layer 3 and the positive electrode active material layer 2 are in contact with each other. The carbon material layer 3 contains a carbon material, a dispersion material, and a binder.

According to the present disclosure, by disposing a specific carbon material layer between the current collector and the active material layer, an electrode exhibiting satisfactory adhesiveness between the current collector and the active material layer at high temperatures can be obtained. As described above, when the all-solid-state battery reaches a high temperature (for example, 80°C), the adhesive property of the carbon material layer may decrease, and the adhesiveness between the current collector and the active material layer may decrease. For example, since the all-solid-state battery generates heat due to a power generation reaction, the temperature of the all-solid-state battery may reach a high temperature depending on the operating conditions of the all-solid-state battery. Furthermore, the reason why the adhesiveness between the current collector and the active material layer is decreased is presumed to be that the binder is softened at high temperatures.

According to the present disclosure, a dispersion material that improves the dispersibility of the carbon material is added to the carbon material layer. Thus, the carbon material is highly dispersed in the carbon material layer. As a result, it is presumed that even when the binder is softened at high temperatures, viscosity is maintained high due to the highly dispersed carbon material, and a decrease in the adhesiveness between the current collector and the active material layer is also suppressed. Furthermore, as the dispersibility of the carbon material is improved, satisfactory ion conduction paths are maintained even when the proportion of the binder in the carbon material layer is increased. As a result, an increase in resistance is suppressed. That is, in a case where the proportion of the binder in the carbon material layer is increased, both an enhancement of the adhesiveness between the current collector and the active material layer and the suppression of an increase in resistance can be achieved. Furthermore, in a case where the proportion of the binder in the carbon material layer is increased, there is also an advantage that a decrease in the adhesiveness between the current collector and the active material layer can be further suppressed.

### 1. Carbon Material Layer

The carbon material layer according to the present disclosure is disposed between the current collector and the active material layer. The carbon material layer has an adhesive property to the extent that enhances the adhesiveness between the current collector and the active material layer. The carbon material layer contains a carbon material, a dispersion material, and a binder. On the other hand, it is preferable that the carbon material layer does not contain an active material. Similarly, it is preferable that the carbon material layer does not contain a solid electrolyte.

### (1) Dispersion Material

The dispersion material in the carbon material layer improves the dispersibility of the carbon material in the carbon material layer. The dispersion material is, for example, a water-soluble material. A water-soluble material refers to a material that completely dissolves in water without separation or precipitation, when 1 g of the target material is added into 99 g of water at 25°C, stirred, and allowed to stand at 25°C for 24 hours. The water-soluble material is preferably a water-soluble resin. Examples of the dispersion material include a vinyl-based resin and a cellulose derivative. Examples of the vinyl-based resin include polyvinyl alcohol, polyvinylpyrrolidone, and polyvinyl butyral. Examples of the cellulose derivative include carboxymethyl cellulose, nitrocellulose, methyl cellulose, ethyl cellulose, hydroxyethyl cellulose, hydroxypropyl cellulose, and hydroxypropylmethyl cellulose. The carbon material layer may contain one kind of dispersion material alone or may contain two or more kinds of dispersion materials.

The proportion of the dispersion material in the carbon material layer is, for example, 1% by weight or more and may be 5% by weight or more. When the proportion of the dispersion material is too small, there is a possibility that the carbon material dispersing effect brought by the dispersion material may not be sufficiently obtained. On the other hand, the proportion of the dispersion material in the carbon material layer is, for example, 50% by weight or less and may be 35% by weight or less. When the proportion of the dispersion material is too large, the proportions of the carbon material and the binder are relatively small, and the resistance may increase, or the adhesive property may be lowered.

The weight proportion of the dispersion material with respect to the carbon material in the carbon material layer is, for example, 0.01 or more, and the weight proportion may be 0.05 or more or may be 0.1 or more. When the weight proportion of the dispersion material is too small, there is a possibility that a carbon material dispersing effect brought by the dispersion material may not be sufficiently obtained. On the other hand, the weight proportion of the dispersion material in the carbon material layer is, for example, 1.5 or less, and the weight proportion may be 1.2 or less or may be 1.0 or less. When the weight proportion of the dispersion material is too large, the proportions of the carbon material and the binder are relatively small, and the resistance may increase, or the adhesive property may be lowered.

### (2) Carbon Material

The carbon material in the carbon material layer imparts electron conductivity to the carbon material layer. Examples of the carbon material include carbon black, carbon fibers, carbon nanotubes (CNT), and carbon nanofibers (CNF). Examples of carbon black include acetylene black (AB), furnace black (FB), and Ketjen black (KB). The carbon material may be a particulate carbon material or may be a fibrous carbon material. The average particle diameter (D₅₀) of the carbon material is, for example, 10 nm or more and 50 µm or less, and may be 100 nm or more and 20 µm or less.

The oil absorption of the carbon material is not particularly limited; however, the oil absorption is, for example, 68 cm³/100 g or more and may be 175 cm³/100 g or more. The oil absorption of the carbon material is an index indicating the degree of development of a structure in which particles of the carbon material are fused together, and generally, a larger oil absorption of the carbon material implies further development of the structure. Even in a case where the binder has been softened at high temperatures, as the structure of the carbon material is well-developed, strength can be imparted to the carbon material layer, and a decrease in the adhesiveness between the current collector and the active material layer can be suppressed. The oil absorption of the carbon material can be determined using an absorption amount measuring instrument, by causing the carbon material to absorb dibutyl phthalate (DBP).

The proportion of the carbon material in the carbon material layer is, for example, 10% by weight or more and may be 15% by weight or more. When the proportion of the carbon material is too small, there is a possibility that an electron conduction path may not be sufficiently formed and the resistance may increase. On the other hand, the proportion of the carbon material in the carbon material layer is, for example, 50% by weight or less and may be 35% by weight or less. When the proportion of the carbon material is too large, the proportions of the dispersion material and the binder are relatively small, and the carbon material dispersing effect may be lowered, or the adhesive property may be lowered.

### (3) Binder

The binder in the carbon material layer imparts an adhesive property to the carbon material layer. Examples of the binder include acrylic binders, such as polymethyl acrylate, polyethyl acrylate, polypropyl acrylate, polybutyl acrylate, polyhexyl acrylate, poly-2-ethylhexyl acrylate, polydecyl acrylate, and polyacrylic acid; methacrylic binders, such as polymethyl methacrylate, polyethyl methacrylate, polybutyl methacrylate, poly-2-ethylhexyl methacrylate, and polymethacrylic acid; fluoride-based binders, such as polyvinylidene fluoride (PVDF), a polyvinylidene fluoride-polyhexafluoropropylene copolymer (PVDF-HFP), polytetrafluoroethylene, and fluororubber; and rubber-based binders, such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, and ethylene-propylene rubber.

It is preferable that the binder includes at least one of an acrylic binder and a methacrylic binder. It is because acrylic binders and methacrylic binders undergo a large temperature-induced change in the elastic modulus and have high workability when adhering the current collector and the active material layer with the carbon material layer interposed therebetween. The binder may be a water-soluble material.

The glass transition temperature (Tg) of the binder is not particularly limited; however, the glass transition temperature is, for example, 30°C or lower and may be 25°C or lower. On the other hand, the glass transition temperature (Tg) of the binder is, for example, -35°C or higher. The glass transition temperature (Tg) of the binder can be determined based on JIS K7121 and JIS K7122.

The proportion of the binder in the carbon material layer is, for example, 20% by weight or more, and the proportion may be 30% by weight or more or may be 50% by weight or more. When the proportion of the binder is too small, there is a possibility that the adhesiveness between the current collector and the active material layer may be lowered. On the other hand, the proportion of the binder in the carbon material layer is, for example, 90% by weight or less and may be 80% by weight or less. When the proportion of the binder is too large, the proportions of the carbon material and the dispersion material are relatively small, and the resistance may be increased, or the carbon material dispersing effect may be lowered.

The carbon material layer may contain the binder as a main component. The term "main component" refers to a component having the highest weight proportion in the carbon material layer. For example, in the carbon material layer, in a case where the proportion of the binder is 40% by weight, the proportion of the carbon material is 30% by weight, and the proportion of the dispersion material is 30% by weight, it is considered that the carbon material layer contains the binder as the main component. On the other hand, the carbon material layer may not contain the binder as the main component. In that case, it is preferable that the carbon material layer contains at least one of the carbon material and the dispersion material as the main component.

In the carbon material layer, the weight proportion of the binder with respect to the carbon material is, for example, 0.8 or more, and the weight proportion may be 1.5 or more, may be 2.0 or more, may be 2.4 or more, or may be 2.8 or more. When the weight proportion of the binder is too small, there is a possibility that the adhesiveness between the current collector and the active material layer may be lowered. On the other hand, the weight proportion of the binder in the carbon material layer is, for example, 7.0 or less and may be 5.0 or less. When the weight proportion of the binder is too large, the proportions of the carbon material and the dispersion material are relatively small, and the resistance may be increased, or the carbon material dispersing effect may be lowered.

### (4) Carbon Material Layer

The carbon material layer according to the present disclosure contains a carbon material, a dispersion material, and a binder. It is preferable that the binder is present at least on the surface on the current collector side of the carbon material layer. It is because the adhesive property of the carbon material layer to the current collector is enhanced. The binder may be uniformly present in the carbon material layer.

The carbon material layer enhances adhesiveness between the current collector and the active material layer. The peel strength between the current collector and the active material layer disposed with the carbon material layer interposed therebetween is, for example, 0.05 N/cm or more at 80°C, and the peel strength may be 0.10 N/cm or more, may be 0.30 N/cm or more, or may be 0.60 N/cm or more. The peel strength between the current collector and the active material layer is, for example, 1 N/cm or less at 80°C. A method for measuring the peel strength will be described in Examples that will be described later.

The electron conductivity (25°C) of the carbon material layer is, for example, 20 S/cm or more and 200 S/cm or less. The thickness of the carbon material layer is, for example, 0.5 µm or more, and the thickness may be 1 µm or more or may be 2 µm or more. On the other hand, the thickness of the carbon material layer is, for example, 15 µm or less, and the thickness may be 12 µm or less, may be 10 µm or less, may be 8 µm or less, or may be 5 µm or less.

The method for forming the carbon material layer is not particularly limited; however, examples thereof include a method of applying a slurry containing a carbon material, a dispersion material, a binder, and a dispersing medium on a current collector and drying the slurry. It is preferable that the dispersing medium is, for example, hydrophilic. Since carbon materials are usually hydrophobic, they have low affinity with hydrophilic dispersing media. In contrast, it is presumed that when a hydrophilic dispersion material is interposed between the carbon material and the dispersing medium, aggregation of the carbon material is eliminated, and the dispersibility of the carbon material is improved. Examples of a hydrophilic dispersing medium include water, alcohols, glycols, cellosolves, aminoalcohols, amines, ketones, carboxylic acid amides, phosphoric acid amides, sulfoxides, carboxylic acid esters, phosphoric acid esters, ethers, and nitriles. It is preferable that the dispersing medium includes at least water.

### 2. Current Collector

The current collector according to the present disclosure collects an electric current from the active material layer through the carbon material layer. In a case where the electrode according to the present disclosure is a positive electrode, the current collector is a positive electrode current collector, and in a case where the electrode according to the present disclosure is a negative electrode, the current collector is a negative electrode current collector.

Examples of a metal element included in the positive electrode current collector include Al, Ni, and Fe. The positive electrode current collector may be a simple substance of the above-described metal element or may be an alloy containing the above-described metal element as a main component. Examples of the shape of the positive electrode current collector include a foil shape and a mesh shape.

Examples of a metal element included in the negative electrode current collector include Cu, Ni, and Fe. The negative electrode current collector may be a simple substance of the above-described metal element or may be an alloy containing the above-described metal element as a main component. Examples of the shape of the negative electrode current collector include a foil shape and a mesh shape.

The thickness of the current collector is, for example, 0.1 µm or more and 500 µm or less, and may be 1 µm or more and 100 µm or less.

### 3. Active Material Layer

The active material layer according to the present disclosure contains at least an active material. In a case where the electrode according to the present disclosure is a positive electrode, the active material is a positive electrode active material, and in a case where the electrode according to the present disclosure is a negative electrode, the active material is a negative electrode active material.

Examples of the positive electrode active material include an oxide active material. Examples of the oxide active material include layered rock salt type active materials, such as LiCoO₂, LiMnO₂, LiNiO₂, LiVO₂, and LiNi₁/₃Co₁/₃Mn₁/₃O₂; spinel type active materials, such as LiMn₂O₄, Li(Ni_{0.5}Mn_{1.5})O₄, and Li₄Ti₅O₁₂; and olivine-type active materials, such as LiFePO₄, LiMnPO₄, LiNiPO₄, and LiCoPO₄. Sulfur (S) or lithium sulfide (Li₂S) may also be used as the positive electrode active material.

Moreover, on the surface of the positive electrode active material, a protective layer containing a Li ion-conductive oxide may be formed. It is because a reaction between the positive electrode active material and the solid electrolyte can be suppressed. Examples of the Li ion-conductive oxide include LiNbO₃. The thickness of the protective layer is, for example, 0.1 nm or more and 100 nm or less, and may be 1 nm or more and 20 nm or less.

Examples of the negative electrode active material include a metal active material, a carbon active material, and an oxide active material. Examples of the metal active material include a simple metal substance and a metal alloy. Examples of a metal element included in the metal active material include Si, Sn, Li, In, and Al. The metal alloy is preferably an alloy containing the above-described metal element as a main component. The metal alloy may be a two-component alloy or a multi-component alloy of a three or more-component system. Examples of the carbon active material include mesocarbon microbeads (MCMB), highly oriented pyrolytic graphite (HOPG), hard carbon, and soft carbon. Examples of the oxide active material include lithium titanates, such as Li₄Ti₅O₁₂.

Examples of the shape of the active material include a particulate shape. The average particle size (D₅₀) of the active material is, for example, 10 nm or more and 50 µm or less, and may be 100 nm or more and 20 µm or less. The proportion of the active material in the active material layer is, for example, 50% by weight or more and may be 60% by weight or more and 99% by weight or less.

The active material layer may further contain a solid electrolyte. Examples of the solid electrolyte include inorganic solid electrolytes, such as a sulfide solid electrolyte and an oxide solid electrolyte. The sulfide solid electrolyte preferably contains Li, A (A represents at least one of P, Si, Ge, Al, and B), and S. Furthermore, it is preferable that the sulfide solid electrolyte has an anion structure of an ortho-composition (PS₄³⁻ structure, SiS₄⁴⁻ structure, GeS₄⁴⁻ structure, AlS₃³⁻ structure, or BS₃³⁻ structure) as a main component of anion. The proportion of the anion structure of an ortho-composition is, for example, 50 mol% or more, and may be 70 mol% or more, with respect to the entire anion structure in the sulfide solid electrolyte. The sulfide solid electrolyte may also contain a lithium halide. Examples of the lithium halide include LiCl, LiBr, and LiI. The solid electrolyte may be glass, may be crystallized glass (glass ceramic), or may be a crystalline material. Examples of the shape of the solid electrolyte include a particulate shape.

The active material layer may further contain at least one of a conductive material and a binder. Examples of the conductive material include the carbon materials described in the above-described section "1. Carbon material layer". Examples of the binder include fluoride-based binders, such as polyvinylidene fluoride (PVDF), a polyvinylidene fluoride-polyhexafluoropropylene copolymer (PVDF-HFP), polytetrafluoroethylene, and fluororubber; and rubber-based binders, such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, and ethylene-propylene rubber. It is preferable that the binder used for the active material layer is of a type different from the binder used for the carbon material layer. For example, the binder used for the active material layer is preferably a fluoride-based binder or a rubber-based binder, and the binder used for the carbon material layer is preferably an acrylic binder or a methacrylic binder.

The thickness of the active material layer is, for example, 0.1 µm or more and 500 µm or less, and may be 1 µm or more and 100 µm or less.

### 4. Electrode

The electrode according to the present disclosure includes a current collector, a carbon material layer having an adhesive property, and an active material layer in this order in the thickness direction. Also, the electrode according to the present disclosure is usually used in an all-solid-state battery. Details of the all-solid-state battery will be described later. According to the present disclosure, a current collector that is used for an all-solid-state battery, the current collector including a carbon material layer that contains a carbon material, a dispersion material, and a binder and has an adhesive property on one surface, can also be provided.

### B. All-solid-state Battery

FIG. 2 is a schematic cross-sectional view illustrating an all-solid-state battery according to the present disclosure. An all-solid-state battery 100 shown in FIG. 2 includes a positive electrode 10 as a first electrode, a negative electrode 20 as a second electrode, and a solid electrolyte layer 30 disposed between the positive electrode 10 and the negative electrode 20. The positive electrode 10 corresponds to the electrode described in the above-described section "A. Electrode". That is, the positive electrode 10 has a positive electrode current collector 1, a carbon material layer 3, and a positive electrode active material layer 2 in this order in the thickness direction D_{T}. On the other hand, the negative electrode 20 does not correspond to the electrode described in the section "A. Electrode". The negative electrode 20 has a negative electrode current collector 11 and a negative electrode active material layer 12 in this order in the thickness direction D_{T}. The solid electrolyte layer 30 is disposed between the positive electrode active material layer 2 of the positive electrode 10 and the negative electrode active material layer 12 of the negative electrode 20.

According to the present disclosure, since at least one of the first electrode and the second electrode is the electrode described above, an all-solid-state battery having satisfactory durability at high temperatures is obtained.

### 1. First Electrode and Second Electrode

The all-solid-state battery according to the present disclosure has a first electrode and a second electrode having a polarity opposite of that of the first electrode. For example, when the first electrode is a positive electrode, the second electrode is a negative electrode. On the contrary, when the first electrode is a negative electrode, the second electrode is a positive electrode. In a case where the all-solid-state battery is viewed in a plan view in the thickness direction, it is preferable that the negative electrode active material layer is disposed so as to include the outer edge of the positive electrode active material layer. It is because short circuits due to dendrites are less likely to occur.

The first electrode has a first current collector and a first active material layer. In a case where the first electrode corresponds to the electrode described in the section "A. Electrode", the first electrode has a first carbon material layer between the first current collector and the first active material layer. On the other hand, the second electrode has a second current collector and a second active material layer. When the second electrode corresponds to the electrode described in the section "A. Electrode", the second electrode has a second carbon material layer between the second current collector and the second active material layer.

In the present disclosure, (i) the first electrode may correspond to the electrode described in "A. Electrode" while the second electrode does not have to correspond to the electrode described in "A. Electrode"; or (ii) the first electrode and the second electrode may each correspond to the electrode described in "A. Electrode". In the case of (i), the first electrode may be a positive electrode or may be a negative electrode.

### 2. Solid Electrolyte Layer

A solid electrolyte layer is a layer that is disposed between the first electrode and the second electrode. The solid electrolyte layer contains at least a solid electrolyte and may further contain a binder. With regard to the solid electrolyte and the binder, since the contents are similar to those described in the section "A. Electrode", further description thereof will not be repeated here. It is preferable that the solid electrolyte layer contains a sulfide solid electrolyte. It is because a sulfide solid electrolyte has high ion conductivity.

The proportion of the solid electrolyte in the solid electrolyte layer is, for example, 10% by weight or more and 100% by weight or less, and may be 50% by weight or more and 100% by weight or less. The thickness of the solid electrolyte layer is, for example, 0.1 µm or more and 500 µm or less, and may be 1 µm or more and 100 µm or less.

### 3. All-solid-state Battery

An all-solid-state battery according to the present disclosure includes a first electrode, a second electrode, and a solid electrolyte layer disposed between the first electrode and the second electrode. Here, in a case where a set including the first electrode, the second electrode, and the solid electrolyte layer is taken as a power generation unit, the all-solid-state battery may have one power generation unit alone or may have a plurality of power generation units. In the latter case, the power generation units may be each connected in series or may be connected in parallel.

FIG. 3 is a schematic cross-sectional view illustrating an all-solid-state battery according to the present disclosure, which is specifically an all-solid-state battery having a plurality of power generation units connected in parallel. Also, in FIG. 3, the first electrode is a positive electrode, and the second electrode is a negative electrode. The all-solid-state battery 100 shown in FIG. 3 includes a positive electrode A (positive electrode 10A) and a positive electrode B (positive electrode 10B) as positive electrodes 10. The all-solid-state battery 100 also includes a solid electrolyte layer A (solid electrolyte layer 30A) and a solid electrolyte layer B (solid electrolyte layer 30B) as solid electrolyte layers 30. The negative electrode 20 includes a negative electrode current collector 11, a negative electrode active material layer A (negative electrode active material layer 12a) formed on one surface of the negative electrode current collector 11, and a negative electrode active material layer B (negative electrode active material layer 12b) formed on the other surface of the negative electrode current collector 11. The solid electrolyte layer A (solid electrolyte layer 30A) is disposed between the negative electrode active material layer 12a and a positive electrode active material layer 2a, and the solid electrolyte layer B (solid electrolyte layer 30B) is disposed between the negative electrode active material layer 12b and a positive electrode active material layer 2b.

Since the all-solid-state battery 100 shown in FIG. 3 has a symmetrical structure in the thickness direction D_{T} with respect to the negative electrode current collector 11, the occurrence of distortion caused by a difference in elasticity of the active material layers can be suppressed. For example, in a case where a bipolar electrode in which a positive electrode active material layer is disposed on one surface of a current collector and a negative electrode active material layer is disposed on the other surface thereof is employed, depending on the pressing conditions, distortion may occur in the current collector due to a difference in elasticity between the positive electrode active material layer and the negative electrode active material layer, and cracks may be generated in the positive electrode active material layer or the negative electrode active material layer. In contrast, as shown in FIG. 3, when active material layers having the same polarity are each disposed on either side of the current collector, there is an advantage that the occurrence of distortion caused by the difference in elasticity of the active material layers can be suppressed.

The all-solid-state battery 100 shown in FIG. 3 includes a positive electrode A (positive electrode 10A), a solid electrolyte layer A (solid electrolyte layer 30A), a negative electrode 20, a solid electrolyte layer B (solid electrolyte layer 30B), and a positive electrode B (positive electrode 10B) in this order in the thickness direction D_{T}. In FIG. 3, both the positive electrode A and the positive electrode B correspond to the electrode described in the section "A. Electrode". That is, the positive electrode A (positive electrode 10A) includes a positive electrode current collector 1a, a first carbon material layer 3a, and a positive electrode active material layer 2a in this order in the thickness direction D_{T}. Similarly, the positive electrode B (positive electrode 10B) includes a positive electrode current collector 1b, a second carbon material layer 3b, and a positive electrode active material layer 2b in this order in the thickness direction D_{T}.

**In** FIG. 3, both the positive electrode A and the positive electrode B correspond to the electrode described in the section "A. Electrode"; however, it is also acceptable that one of the positive electrode A and the positive electrode B alone corresponds to the electrode described in the section "A. Electrode". Furthermore, in FIG. 3, the first electrode is a positive electrode, and the second electrode is a negative electrode; however, this relationship may be reversed. That is, the positive electrode in FIG. 3 may be a negative electrode, and the negative electrode in FIG. 3 may be a positive electrode. In that case, both the negative electrode A and the negative electrode B may correspond to the electrode described in the section "A. Electrode", or one of the negative electrode A and the negative electrode B alone may correspond to the electrode described in the section "A. Electrode".

The all-solid-state battery according to the present disclosure may include an outer packaging body that accommodates power generation elements (first electrodes, second electrodes, and solid electrolyte layers). Examples of the outer packaging body include a laminate type outer packaging body and a case type outer packaging body. The all-solid-state battery according to the present disclosure may be subjected to a confining pressure applied by a constraining jig or may not be subjected to a confining pressure applied by a constraining jig. Since the carbon material layer according to the present disclosure has a satisfactory adhesive property at high temperatures, an all-solid-state battery having low resistance can be obtained even when a confining pressure is not applied by a constraining jig. On the other hand, in a case where a confining pressure is applied by a constraining jig, the confining pressure is, for example, 1 MPa or more and 50 MPa or less, or may be 5 MPa or more and 20 MPa or less.

The type of the all-solid-state battery in the present disclosure is not particularly limited; however, the all-solid-state battery is typically a lithium ion secondary battery. There is no particular limitation on the use application of the all-solid-state battery according to the present disclosure; however, examples include electric power sources for vehicles, such as a hybrid electric vehicle (HEV), a plug-in hybrid electric vehicle (PHEV), a battery electric vehicle (BEV), a gasoline vehicle, and a diesel vehicle. Particularly, it is preferable that the all-solid-state battery is used as an electric power source for driving of a hybrid electric vehicle, a plug-in hybrid electric vehicle, or a battery electric vehicle. The all-solid-state battery according to the present disclosure may be used as an electric power source for mobile objects other than vehicles (for example, trains, ships, and aircraft) or may be used as an electric power source for electrical appliances, such as information processing devices.

### C. Method for Producing All-solid-state Battery

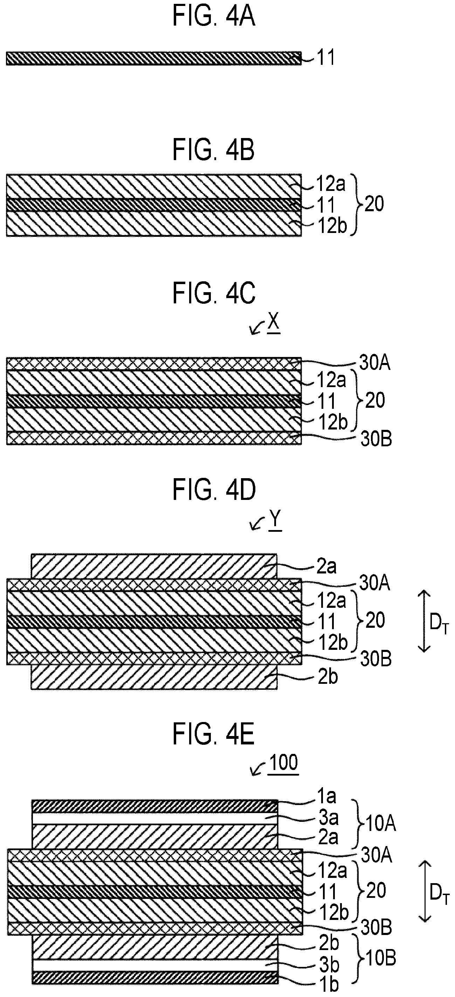

FIGS. 4A to 4E is a schematic cross-sectional view illustrating a method for producing an all-solid-state battery according to the present disclosure. FIGS. 4A to 4E illustrates a case where the first electrode is a positive electrode and the second electrode is a negative electrode. In the method for producing an all-solid-state battery shown in FIGS. 4A to 4E, first, a negative electrode current collector 11 is prepared (FIG. 4A). Next, a negative electrode active material layer A (negative electrode active material layer 12a) is formed on one surface of the negative electrode current collector 11, and a negative electrode active material layer B (negative electrode active material layer 12b) is formed on the other surface of the negative electrode current collector 11. As a result, a negative electrode 20 is obtained (FIG. 4B). Regarding a method of forming a negative electrode active material layer, for example, a method of applying a slurry for forming a negative electrode active material layer on the negative electrode current collector 11 and then drying the slurry, may be mentioned. The negative electrode 20 may be subjected to pressing as needed.

Next, a solid electrolyte layer A (solid electrolyte layer 30A) is formed on the negative electrode active material layer A (negative electrode active material layer 12a), a solid electrolyte layer B (solid electrolyte layer 30B) is formed on the negative electrode active material layer B (negative electrode active material layer 12b), and a laminate X is obtained (FIG. 4C). Examples of a method for forming a solid electrolyte layer include a transfer method. Regarding the transfer method, for example, a method of preparing a transfer member having a substrate and a solid electrolyte layer, pressing the solid electrolyte layer in the transfer member and the negative electrode active material layer in a state of being disposed so as to face each other, and then peeling the substrate from the solid electrolyte layer, may be mentioned.

Next, a first active material layer A (first active material layer 2a) is formed on the solid electrolyte layer A (solid electrolyte layer 30A) in the laminate X, a first active material layer B (first active material layer 2b) is formed on the solid electrolyte layer B (solid electrolyte layer 30B) in the laminate X, and a laminate Y is obtained (FIG. 4D). Examples of a method for forming the first active material layer include a transfer method. Regarding the transfer method, for example, a method of preparing a transfer member having a substrate and a first active material layer, pressing the first active material layer in the transfer member and the solid electrolyte layer in a state of being disposed so as to face each other, and then peeling the substrate from the first active material layer, may be mentioned. Subsequently, although not particularly shown in the diagram, a pressing treatment is performed in order to densify the laminate Y. As a result, a precursor laminate including the first active material layer A (first active material layer 2a), the solid electrolyte layer A (solid electrolyte layer 30A), the negative electrode active material layer A (negative electrode active material layer 12a), the second current collector (negative electrode current collector 11), the negative electrode active material layer B (negative electrode active material layer 12b), the solid electrolyte layer B (solid electrolyte layer 30B), and the first active material layer B (first active material layer 2b) in this order in the thickness direction D_{T} is obtained.

Next, a first current collector A (first current collector 1a) is disposed on the first active material layer A (first active material layer 2a) of the precursor laminate, with a first carbon material layer 3a containing a carbon material, a dispersion material, and a binder interposed between the first current collector A and the first active material layer A (FIG. 4E). Similarly, a first current collector B (first current collector 1b) is disposed on the first active material layer B (first active material layer 2b) of the precursor laminate, with a second carbon material layer 3b containing a carbon material, a dispersion material, and a binder interposed between the first current collector B and the first active material layer B (FIG. 4E). As a result, the all-solid-state battery 100 is obtained.

According to the present disclosure, by disposing the first current collector A on the first active material layer A with the first carbon material layer interposed therebetween, an all-solid-state battery having satisfactory durability at high temperatures is obtained. For example, in FIGS. 4A to 4E described above, pressing is performed at a high pressure in order to densify the laminate Y (densification pressing). At that time, when the laminate Y has the first current collector A, there is a possibility that the first active material layer A may not be sufficiently densified, or the first current collector A may be damaged. Therefore, it is preferable that the laminate Y is subjected to densification pressing without the first current collector A. Furthermore, after the densification pressing, it is preferable to dispose the first current collector A on the first active material layer A. According to the present disclosure, an all-solid-state battery having satisfactory durability at high temperatures is obtained by disposing the first current collector A on the first active material layer A with the first carbon material layer interposed therebetween.

### 1. Preparation Step

A preparation step according to the present disclosure is a step of preparing a precursor laminate that includes a first active material layer A, a solid electrolyte layer A, a second active material layer A, a second current collector, a second active material layer B, a solid electrolyte layer B, and a first active material layer B in this order in the thickness direction.

A method for preparing the precursor laminate is not particularly limited; however, for example, a method shown in FIGS. 4A to 4D may be mentioned. Each layer constituting the precursor laminate is the same as in the content described in the above-described section "B. All-solid-state battery".

### 2. First Disposition Step

A first disposition step according to the present disclosure is a step of disposing a first current collector A on the first active material layer A of the precursor laminate, with a first carbon material layer containing a carbon material, a dispersion material, and a binder.

The first carbon material layer may be formed in advance on the first current collector A or may be formed in advance on the first active material layer A. Furthermore, the first carbon material layer may be transferred onto the first active material layer A or the first current collector A by using a transfer member having a substrate and a first carbon material layer, immediately before the first active material layer A and the first current collector A are disposed to face each other. The first carbon material layer and the first current collector A are the same as in the content described in the section "B. All-solid-state battery".

### 3. Second Disposition Step

The method for producing an all-solid-state battery according to the present disclosure usually includes a second disposition step of disposing a first current collector B on the first active material layer B of the precursor laminate. The first current collector B may be disposed directly on the first active material layer B, or the first current collector B may be disposed on the first active material layer B with another layer interposed therebetween. Examples of the other layer include a second carbon material layer containing a carbon material, a dispersion material, and a binder.

The second carbon material layer may be formed in advance on the first current collector B or may be formed in advance on the first active material layer B. Furthermore, the second carbon material layer may be transferred onto the first active material layer B or the first current collector B by using a transfer member having a substrate and the second carbon material layer, immediately before the first active material layer B and the first current collector B are disposed to face each other. The second carbon material layer and the first current collector B are as described in the section "B. All-solid-state battery".

### 4. All-solid-state Battery

The all-solid-state battery obtained by each of the steps described above is the same as in the content described in the section "B. All-solid-state battery", and therefore, further description will not be repeated here.

### Example 1

### Production of Positive Electrode Active Material Having Coating Layer

A positive electrode active material (particles containing Li_{1.15}Ni₁/₃Co₁/₃Mn₁/₃O₂ as a main phase) was coated with lithium niobate in an air atmosphere by using a tumbling fluidization type coating device (manufactured by Powrex Corporation) and was calcined in an air atmosphere. As a result, a positive electrode active material having a coating layer of lithium niobate was obtained.

### Production of Positive Electrode Active Material Layer

Into a container made of polypropylene, a positive electrode active material, a sulfide solid electrolyte (Li₂S-P₂S₅-based glass ceramic), a binder (PVDF), a conductive material (VGCF, manufactured by Showa Denko K.K.), and dispersing medium were introduced, and the mixture was stirred for 30 seconds with an ultrasonic dispersing device (UH-50 manufactured by SMT Co., Ltd.). Next, the container was shaken for 3 minutes in a shaker (TTM-1 manufactured by Sibata Scientific Technology, Ltd.), and the mixture was further stirred for 30 seconds with an ultrasonic dispersing device. Next, the container was shaken for 3 minutes in a shaker, and a slurry was obtained. The obtained slurry was applied on a substrate (aluminum foil) by a blade method by using an applicator. Next, the slurry was dried naturally and was further dried on a hot plate at 100°C for 30 minutes. As a result, a positive electrode active material layer was formed on the aluminum foil as a substrate. The amount of the slurry applied was adjusted such that the positive electrode active material layer had a thickness of 15 µm in a state after densification, which will be described later.

### Production of Negative Electrode

In a container made of polypropylene, a negative electrode active material (LTO particles), a sulfide solid electrolyte (Li₂S-P₂S₅-based glass ceramic), a binder (PVDF), a conductive material (VGCF, manufactured by Showa Denko K.K.), and dispersing medium were introduced, and the mixture was stirred for 30 seconds with an ultrasonic dispersing device (UH-50 manufactured by SMT Co., Ltd.). Next, the container was shaken for 3 minutes in a shaker (TTM-1 manufactured by Sibata Scientific Technology, Ltd.), and the mixture was further stirred for 30 seconds with an ultrasonic dispersing device. Next, the container was shaken for 3 minutes in a shaker, and a slurry was obtained. The obtained slurry was applied on a negative electrode current collector (copper foil) by a blade method by using an applicator. Next, the slurry was dried naturally and was further dried on a hot plate at 100°C for 30 minutes. As a result, a negative electrode active material layer was formed on one surface of the negative electrode current collector (copper foil). A negative electrode active material layer was formed also on the other surface of the negative electrode current collector (copper foil) by a similar operation. In this way, a negative electrode was obtained in which a negative electrode active material layer was disposed on each of both sides of the negative electrode current collector (copper foil).

### Production of Solid Electrolyte Layer

Into a container made of polypropylene, a sulfide solid electrolyte (Li₂S-P₂S₅-based glass ceramic), a binder (BR), and a dispersing medium (heptane) were introduced, and the mixture was stirred for 30 seconds with an ultrasonic dispersing device (UH-50 manufactured by SMT Co., Ltd.). Next, the container was shaken for 30 minutes with a shaker (TTM-1 manufactured by Sibata Scientific Technology, Ltd.), and the mixture was further stirred for 30 seconds with an ultrasonic dispersing device. Next, the container was shaken for 3 minutes in a shaker to obtain a slurry. The obtained slurry was applied on a substrate (aluminum foil) by a blade method by using an applicator. Next, the slurry was dried naturally and was further dried on a hot plate at 100°C for 30 minutes. As a result, a solid electrolyte layer was formed on the aluminum foil as a substrate.

### Production of Positive Electrode Current Collector Having Carbon Material Layer

A conductive material (acetylene black, AB, oil absorption: 175 cm³/100 g), a binder (acrylic binder, Tg: -30°C), and a dispersion material (polyvinyl alcohol) were weighed, such that the weight ratio of conductive material:binder:dispersion material was 25:50:25. Next, a dispersing medium (water) was added to the mixture, and a slurry for a carbon material layer was obtained. The obtained slurry was applied on a positive electrode current collector (aluminum foil) by a blade method by using an applicator. Next, the slurry was dried at 120°C. As a result, a positive electrode current collector having a carbon material layer was obtained.

### Production of All-solid-state Battery

A solid electrolyte layer was disposed on each of both sides of the negative electrode, and the assembly was pressed at a linear pressure of 1.6 t/cm. Next, the substrate (aluminum foil) was peeled off from the solid electrolyte layer, and a laminate X having the solid electrolyte layer A, the negative electrode, and the solid electrolyte layer B was obtained. Next, a positive electrode active material layer was disposed on each of the surfaces of the solid electrolyte layer A and the solid electrolyte layer B, and the assembly was pressed at a linear pressure of 1.6 t/cm. Next, the substrate (aluminum foil) was peeled off from the positive electrode active material layers, and a laminate Y was obtained. Next, the laminate Y was pressed at a linear pressure of 5 t/cm to be densified. As a result, a precursor laminate having a positive electrode active material layer A, a solid electrolyte layer A, a negative electrode, a solid electrolyte layer B, and a positive electrode active material layer B was obtained. Next, the positive electrode was laser-trimmed to a size of 70.0 mm × 70.0 mm, and the negative electrode was cut to a size of 72.0 mm × 72.0 mm. Next, a positive electrode current collector having a carbon material layer was disposed on each of the positive electrode active material layer A and the positive electrode active material layer B, ten units of the laminate were laminated, and the laminates were pressed under the conditions of 140°C, 5 MPa, and 1 hour to obtain a power generation element. Terminals were installed on the obtained power generation element by welding, and the power generation element was encapsulated in a laminate cell to obtain an all-solid-state battery.

### Examples 2 to 7

An all-solid-state battery was obtained in the same manner as in Example 1, except that the type of the acrylic binder and the composition of the slurry for the carbon material layer were changed to the content shown in Table 1.

### Comparative Examples 1 and 2

An all-solid-state battery was obtained in the same manner as in Example 1, except that the type of acrylic binder and the composition of the slurry for the carbon material layer were changed according to the content shown in Table 2.

### Evaluation

### Resistance Measurement

The resistance of the all-solid-state batteries obtained in Examples 1 to 7 and Comparative Examples 1 and 2 was measured. Specifically, CCCV charging up to 2.85 V was performed at a current value of 0.3 C, and then CCCV discharging down to 2.5 V was performed at a current value of 0.3 C. Subsequently, CC discharging was performed under the conditions of 15 C, 2 seconds, and 25°C, and the resistance was calculated from the voltage change at that time. The results are shown in Table 1 and Table 2.

### Peel Strength Measurement

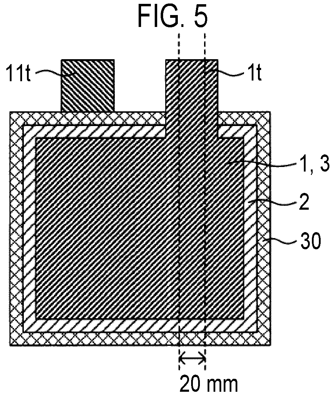

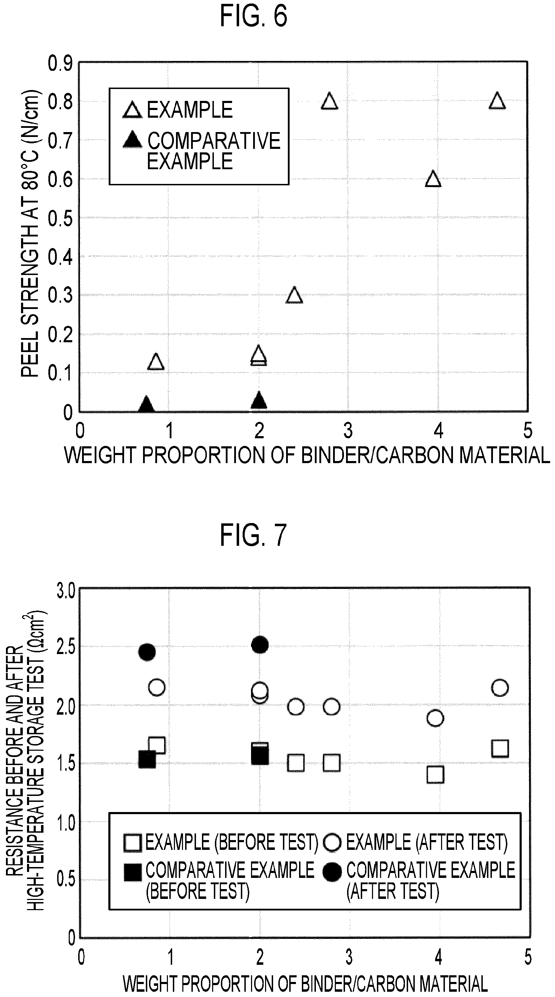

By using the all-solid-state batteries obtained in Examples 1 to 7 and Comparative Examples 1 and 2, the peel strength between the positive electrode current collector and the positive electrode active material layer was measured. As shown in FIG. 5, an all-solid-state battery was cut to a width of 20 mm, the back surface side was fixed to a pedestal, a peeling test of peeling by lifting a tab 1t of the positive electrode current collector 1 in the direction of 90° in accordance with JIS Z0237 was performed, and the peel strength at 80°C was measured. The results are shown in Table 1, Table 2, and FIG. 6.

### High-temperature Storage Test

A high-temperature storage test was performed for the all-solid-state batteries obtained in Examples 1 to 7 and Comparative Examples 1 and 2. Specifically, the all-solid-state batteries were stored for three months in a temperature environment of 80°C. The resistance at 80°C was measured before and after the storage. The results are shown in Table 1, Table 2, and FIG. 7.

**Table 1**

| | Example 1 | Example 2 | Example 3 | Comparative Example 4 | Example 5 | Example 6 | Example 7 |
|---|---|---|---|---|---|---|---|
| Binder Tg (°C) | -30 | 18 | 18 | 18 | 18 | 18 | 18 |
| Binder (wt%) | 50 | 50 | 70 | 30 | 60 | 70 | 79 |
| Carbon material (wt%) | 25 | 25 | 15 | 35 | 25 | 25 | 20 |
| Dispersion material (wt%) | 25 | 25 | 15 | 35 | 15 | 5 | 1 |
| Binder/carbon material | 2.00 | 2.00 | 4.67 | 0.86 | 2.40 | 2.80 | 3.95 |
| Resistance (Ωcm², 25°C) | 0.4 | 0.4 | 0.42 | 0.45 | 0.3 | 0.3 | 0.2 |
| Peel strength (N/cm, 80°C) | 0.14 | 0.15 | 0.8 | 0.13 | 0.3 | 0.8 | 0.6 |
| Resistance before storage (Ωcm², 80°C) | 1.6 | 1.6 | 1.62 | 1.65 | 1.5 | 1.5 | 1.4 |
| Resistance after storage (Ωcm², 80°C) | 2.08 | 2.12 | 2.14 | 2.15 | 1.98 | 1.98 | 1.88 |

**Table 2**

| | Comparative Example 1 | Comparative Example 2 |
|---|---|---|
| Binder Tg (°C) | 30 | 30 |
| Binder (wt%) | 66.7 | 42.9 |
| Carbon material (wt%) | 33.3 | 57.1 |
| Dispersion material (wt%) | 0 | 0 |
| Binder/carbon material | 2.00 | 0.75 |
| Resistance (Ωcm², 25°C) | 0.36 | 0.33 |
| Peel strength (N/cm, 80°C) | 0.03 | 0.02 |
| Resistance before storage (Ωcm², 80°C) | 1.56 | 1.53 |
| Resistance after storage (Ωcm², 80°C) | 2.51 | 2.45 |

As shown in Table 1, Table 2, and FIG. 6, it was confirmed that Examples 1 to 7 that used a dispersion material had a higher peel strength at 80°C than Comparative Examples 1 and 2 that did not use a dispersion material. Furthermore, when the weight proportion of the binder with respect to the carbon material was 2.0 or more, a noticeable increase in the peel strength was observed. Particularly, in a case where the weight proportion of the binder with respect to the carbon material was 2.8 or more, a very high peel strength was obtained. Thus, it was confirmed that by adding a dispersion material to the carbon material layer, an electrode having satisfactory adhesiveness between the current collector and the active material layer at high temperatures is obtained.

As shown in FIG. 7, before the high-temperature storage test, the resistances of Examples 1 to 7 and Comparative Examples 1 and 2 were all on the same level. On the other hand, after the high-temperature storage test, an increase in resistance could be further suppressed in Examples 1 to 7 than in Comparative Examples 1 and 2. In Examples 1 to 7, it was expected that the resistance would increase as the weight proportion of the binder to the carbon material increased; however, surprisingly, an increase in resistance was not verified. It is presumed to be because as the dispersibility of the carbon material in the carbon material layer was improved, satisfactory ion conduction paths were maintained even when the weight proportion of the binder was increased.

## Claims

1. An electrode (10) for an all-solid-state battery (100), the electrode (10) comprising, in the following order in a thickness direction:
a current collector (1);
a carbon material layer (3) having an adhesive property; and
an active material layer (2),
wherein the carbon material layer (3) contains a carbon material, a dispersion material, and a binder, and
wherein a weight proportion of the binder with respect to the carbon material in the carbon material layer (3) is 2.0 or more, and the dispersion material includes polyvinyl alcohol.

2. The electrode (10) according to claim 1, wherein a proportion of the dispersion material in the carbon material layer (3) is 1% by weight or more.

3. The electrode (10) according to claim 1 or 2, wherein a proportion of the dispersion material in the carbon material layer (3) is 35% by weight or less.

4. The electrode (10) according to any one of claims 1 to 3, wherein a weight proportion of the dispersion material with respect to the carbon material in the carbon material layer (3) is 0.05 or more and 1.2 or less.

5. The electrode (10) according to any one of claims 1 to 4, wherein the carbon material layer (3) contains the binder as a main component.

6. The electrode (10) according to any one of claims 1 to 5, wherein a proportion of the binder in the carbon material layer (3) is 50% by weight or more.

7. The electrode (10) according to any one of claims 1 to 6, wherein the weight proportion of the binder with respect to the carbon material in the carbon material layer (3) is 2.8 or more.

8. The electrode (10) according to any one of claims 1 to 7, wherein the dispersion material includes at least one of a vinyl-based resin and a cellulose derivative.

9. The electrode (10) according to any one of claims 1 to 8, wherein the binder includes at least one of an acrylic binder and a methacrylic binder.

10. The electrode (10) according to any one of claims 1 to 9, wherein the carbon material has an oil absorption of 175 cm³/100 g or more, wherein the oil absorption is determined using an absorption measurement instrument by causing the carbon material to absorb dibutyl phthalate.

11. The electrode (10) according to any one of claims 1 to 10, wherein the carbon material includes carbon black.

12. The electrode (10) according to any one of claims 1 to 11, wherein a peel strength between the current collector (1) and the active material layer (2) is 0.10 N/cm or more at 80°C, wherein the peel strength is determined by cutting the all-solid-state battery to a width of 20 mm, fixing the back surface side to a pedestal, and lifting a tab of the positive electrode current collector in the direction of 90°.

## Patentansprüche

1. Elektrode (10) für eine All-Solid-State-Batterie (100), wobei die Elektrode (10) in einer Dickenrichtung Folgendes in der folgenden Reihenfolge umfasst:
einen Stromkollektor (1);
eine Kohlenstoffmaterialschicht (3) mit einer Klebeeigenschaft; und
eine Aktivmaterialschicht (2),
wobei die Kohlenstoffmaterialschicht (3) ein Kohlenstoffmaterial, ein Dispersionsmaterial und ein Bindemittel enthält, und
wobei ein Gewichtsanteil des Bindemittels in Bezug auf das Kohlenstoffmaterial in der Kohlenstoffmaterialschicht (3) 2,0 oder mehr beträgt und das Dispersionsmaterial Polyvinylalkohol beinhaltet.

2. Elektrode (10) nach Anspruch 1, wobei ein Anteil des Dispersionsmaterials in der Kohlenstoffmaterialschicht (3) 1 Gew.-% oder mehr beträgt.

3. Elektrode (10) nach Anspruch 1 oder 2, wobei ein Anteil des Dispersionsmaterials in der Kohlenstoffmaterialschicht (3) 35 Gew.-% oder weniger beträgt.

4. Elektrode (10) nach einem der Ansprüche 1 bis 3, wobei ein Gewichtsanteil des Dispersionsmaterials in Bezug auf das Kohlenstoffmaterial in der Kohlenstoffmaterialschicht (3) 0,05 oder mehr und 1,2 oder weniger beträgt.

5. Elektrode (10) nach einem der Ansprüche 1 bis 4, wobei die Kohlenstoffmaterialschicht (3) das Bindemittel als Hauptkomponente enthält.

6. Elektrode (10) nach einem der Ansprüche 1 bis 5, wobei ein Anteil des Bindemittels in der Kohlenstoffmaterialschicht (3) 50 Gew.-% oder mehr beträgt.

7. Elektrode (10) nach einem der Ansprüche 1 bis 6, wobei der Gewichtsanteil des Bindemittels in Bezug auf das Kohlenstoffmaterial in der Kohlenstoffmaterialschicht (3) 2,8 oder mehr beträgt.

8. Elektrode (10) nach einem der Ansprüche 1 bis 7, wobei das Dispersionsmaterial mindestens eines von einem Harz auf Vinylbasis und einem Cellulosederivat beinhaltet.

9. Elektrode (10) nach einem der Ansprüche 1 bis 8, wobei das Bindemittel ein Acrylbindemittel und/oder ein Methacrylbindemittel beinhaltet.

10. Elektrode (10) nach einem der Ansprüche 1 bis 9, wobei das Kohlenstoffmaterial eine Ölabsorption von 175 cm³/100 g oder mehr aufweist, wobei die Ölabsorption unter Verwendung eines Absorptionsmessgeräts bestimmt wird, indem das Kohlenstoffmaterial veranlasst wird, Dibutylphthalat zu absorbieren.

11. Elektrode (10) nach einem der Ansprüche 1 bis 10, wobei das Kohlenstoffmaterial Ruß beinhaltet.

12. Elektrode (10) nach einem der Ansprüche 1 bis 11, wobei eine Schälfestigkeit zwischen dem Stromkollektor (1) und der Aktivmaterialschicht (2) bei 80°C 0,10 N/cm oder mehr beträgt, wobei die Schälfestigkeit durch Zuschneiden der All-Solid-State-Batterie auf eine Breite von 20 mm, Befestigen der Rückseite an einem Sockel und Anheben einer Lasche des Stromkollektors der positiven Elektrode in Richtung von 90° bestimmt wird.

## Revendications

1. Électrode (10) pour une batterie tout-solide (100), l'électrode (10) comprenant, dans l'ordre suivant dans la direction de l'épaisseur :
un collecteur de courant (1) ;
une couche de matériau carboné (3) ayant une propriété adhésive ; et
une couche de matériau actif (2),
la couche de matériau carboné (3) contenant un matériau carboné, un matériau de dispersion et un liant, et
la proportion pondérale du liant par rapport au matériau carboné dans la couche de matériau carboné (3) étant de 2,0 ou plus, et le matériau de dispersion comportant de l'alcool polyvinylique.

2. Électrode (10) selon la revendication 1, dans laquelle la proportion du matériau de dispersion dans la couche de matériau carboné (3) est de 1 % en poids ou plus.

3. Électrode (10) selon la revendication 1 ou 2, dans laquelle la proportion du matériau de dispersion dans la couche de matériau carboné (3) est de 35 % en poids ou moins.

4. Électrode (10) selon l'une quelconque des revendications 1 à 3, dans laquelle la proportion pondérale du matériau de dispersion par rapport au matériau carboné dans la couche de matériau carboné (3) est de 0,05 ou plus et de 1,2 ou moins.

5. Électrode (10) selon l'une quelconque des revendications 1 à 4, dans laquelle la couche de matériau carboné (3) contient le liant comme principal composant.

6. Électrode (10) selon l'une quelconque des revendications 1 à 5, dans laquelle la proportion du liant dans la couche de matériau carboné (3) est de 50 % en poids ou plus.

7. Électrode (10) selon l'une quelconque des revendications 1 à 6, dans laquelle la proportion pondérale du liant par rapport au matériau carboné dans la couche de matériau carboné (3) est de 2,8 ou plus.

8. Électrode (10) selon l'une quelconque des revendications 1 à 7, dans laquelle le matériau de dispersion comporte une résine vinylique et/ou un dérivé cellulosique.

9. Électrode (10) selon l'une quelconque des revendications 1 à 8, dans laquelle le liant comporte un liant acrylique et/ou un liant méthacrylique.

10. Électrode (10) selon l'une quelconque des revendications 1 à 9, dans laquelle le matériau carboné présente une absorption d'huile de 175 cm³/100 g ou plus, l'absorption d'huile étant déterminée au moyen d'un instrument de mesure d'absorption en amenant le matériau carboné à absorber du phtalate de dibutyle.

11. Électrode (10) selon l'une quelconque des revendications 1 à 10, dans laquelle le matériau carboné comporte du noir de carbone.

12. Électrode (10) selon l'une quelconque des revendications 1 à 11, dans laquelle une résistance au pelage entre le collecteur de courant (1) et la couche de matériau actif (2) est de 0,10 N/cm ou plus à 80 °C, la résistance au pelage étant déterminée par découpe de la batterie tout-solide à une largeur de 20 mm, fixation du côté de la surface arrière à un socle, et levage d'une patte du collecteur de courant de l'électrode positive dans la direction de 90°.
